# EUROPÄISCHE PATENTANMELDUNG

(11) **EP 4 144 697 A2**
(43) Veröffentlichungstag der Anmeldung: **08.03.2023**
(21) Anmeldenummer: 22193619.8
(22) Anmeldetag: 02.09.2022
(51) Int. Cl.: C01G 9/02

(54) **VERFAHREN UND VORRICHTUNG ZUR SYNTHESE VON ZINKIT (ZNO)**

(30) Priorität: 03.09.2021 DE 102021122905
(71) Anmelder: Ludwig-Maximilians-Universität München, 80539 München (DE)
(72) Erfinder: Heuss-Aßbichler, Soraya, 81479 München (DE); Tandon, Kai, 81476 München (DE)
(74) Vertreter: Hofstetter, Schurack & Partner

(57) **Zusammenfassung**

Die Erfindung betrifft ein Verfahren und eine Vorrichtung zur Synthese von Zinkit (ZnO). Das Verfahren umfasst zumindest die Schritte Bereitstellen einer wässrigen Lösung, welche zumindest Zink-Ionen und wenigstens eine Anionenart enthält und einen Start-pH-Wert ≤7 besitzt, und Alkalisieren der wässrigen Lösung bei einer vorbestimmten Temperatur, welche höchstens 110 °C beträgt, mit einer vorbestimmten Alkalisierungsrate A, welche mindestens 0,010 ΔpH/s beträgt, bis zum Erreichen eines End-pH-Werts, welcher mindestens 7,5 beträgt, zum Bilden des Zinkits. Die Vorrichtung weist einen Behälter, eine pH-Steuer- und/oder Regeleinrichtung sowie eine Recheneinrichtung auf, um die Durchführung des Verfahrens zu steuern bzw. zu regeln.

## Beschreibung

Die Erfindung betrifft ein Verfahren und eine Vorrichtung zur Synthese von Zinkit (ZnO).

Aufgrund seiner einzigartigen physikalischen und chemischen Eigenschaften findet ZnO (Zinkit) in den verschiedensten Bereichen Anwendung. Hier zu nennen ist beispielsweise die Kautschuk-Industrie, wo ZnO als Füllmaterial oder Aktivator verwendet wird. In der Pharmazie ist es Bestandteil einer Vielzahl von Cremes, Pudern oder Zahnpasten. In verschiedenen anderen Industriebereichen wird ZnO wiederum als UV-Absorber genutzt. Außerdem wird ZnO in der Photoelektronik, beispielsweise für Feldemitter, Sensoren, UV-Laser oder Solarzellen, sowie als Photokatalysator verwendet.

Aufgrund dieser breiten Anwendungsbereiche von ZnO gibt es bereits eine Vielzahl von sehr unterschiedlichen Synthesemethoden. ZnO kann metallurgisch oder mechanochemisch, durch kontrollierte Fällungsreaktionen, über Sol-Gel Methoden, solvothermale und hydrothermale Verfahren, Emulsionen, Mikroemulsionen aber auch durch Züchtungen von ZnO über Dampfabscheidung, sonochemische Methoden oder unter Verwendung von Mikrowellentechnik synthetisiert werden.

Die meisten chemischen Verfahren sind aber sehr aufwendig und erfordern unterschiedliche Zugabestoffe wie Tenside, organische Lösemittel oder Säuren. Die derzeit praktizierten nasschemischen Syntheseroutinen generieren im ersten Schritt meist eine Nebenphase bzw. ein Zwischenprodukt, beispielsweise Zinkhydroxid, Zinkcarbonat oder Zink-Hydroxidchlorid. Dieses Zwischenprodukt wird dann bei Temperaturen über 300°C kalziniert, wodurch ZnO entsteht.

Als nachteilig an den bekannten Verfahren sind daher die aufwendige Verfahrensführung der mehrstufigen Verfahren, der Einsatz großer Energiemengen sowie die kostenintensiven Produktionsverfahren durch Zugabe von Reduktionsmitteln und sonstigen Hilfsstoffen zu nennen. Die bekannten Verfahren sind damit als umweltbelastend zu bewerten. Darüber hinaus eignen sich die bekannten Verfahren nicht zur Gewinnung von Zinkit aus salinen bzw. Sulfat- und/oder Chlorid-reichen Lösungen. Beispielweise fallen in der Galvanik Zink- und Sulfat-haltige Lösungen mit Konzentrationen von bis zu 60 g/L Zn²⁺ an.

Es ist daher Aufgabe der vorliegenden Erfindung, einen einfacheren Syntheseweg für Zinkit aufzuzeigen, der eine Herstellung mit geringem Energieeinsatz und ohne die Notwendigkeit von zusätzlichen Reduktionsmitteln und dergleichen in möglichst wenig Stufen ermöglicht. Eine weitere Aufgabe der Erfindung besteht darin, eine entsprechende Vorrichtung zur Durchführung eines solchen Verfahrens zu schaffen.

Die Aufgaben werden erfindungsgemäß durch ein Verfahren mit den Merkmalen des Patentanspruchs 1 zur Synthese von Zinkit (ZnO) sowie durch eine Vorrichtung gemäß Anspruch 15 gelöst. Vorteilhafte Ausgestaltungen mit zweckmäßigen Weiterbildungen der Erfindung sind in den jeweiligen Unteransprüchen angegeben, wobei vorteilhafte Ausgestaltungen des Verfahrens als vorteilhafte Ausgestaltungen der Vorrichtung anzusehen sind. Umgekehrt sind auch vorteilhafte Ausgestaltungen der Vorrichtung als vorteilhafte Ausgestaltungen des Verfahrens anzusehen.

Ein erfindungsgemäßes Verfahren zur Synthese von Zinkit (ZnO), umfasst zumindest die Schritte Bereitstellen einer wässrigen Lösung, welche zumindest Zink-Ionen und wenigstens eine Anionenart enthält und einen Start-pH-Wert ≤ 7 besitzt und Alkalisieren der wässrigen Lösung bei einer vorbestimmten Temperatur, welche höchstens 110 °C beträgt, mit einer vorbestimmten Alkalisierungsrate A, welche mindestens 0,010 ΔpH/s beträgt, bis zum Erreichen eines End-pH-Werts, welcher mindestens 7,5 beträgt. Mit anderen Worten sieht das erfindungsgemäße Verfahren Reaktionstemperaturen von etwa 0 °C (Standardbedingungen gemäß IUPAC-STP-Bedingungen (standard temperature and pressure)) bis etwa 110°C vor. Das erfindungsgemäße Verfahren ermöglicht erstmals eine Synthese von Zinkit aus einer wässrigen Lösung bei gemäßigten Reaktionstemperaturen zwischen etwa 0 °C und 110 °C, das heißt beispielsweise bei 0 °C, 1 °C, 2 °C, 3 °C, 4 °C, 5 °C, 6 °C, 7 °C, 8 °C, 9 °C, 10 °C, 11 °C, 12 °C, 13 °C, 14 °C, 15 °C, 16 °C, 17 °C, 18 °C, 19 °C, 20 °C, 21 °C, 22 °C, 23 °C, 24 °C, 25 °C, 26 °C, 27 °C, 28 °C, 29 °C, 30 °C, 31 °C, 32 °C, 33 °C, 34 °C, 35 °C, 36 °C, 37 °C, 38 °C, 39 °C, 40 °C, 41 °C, 42 °C, 43 °C, 44 °C, 45 °C, 46 °C, 47 °C, 48 °C, 49 °C, 50 °C, 51 °C, 52 °C, 53 °C, 54 °C, 55 °C, 56 °C, 57 °C, 58 °C, 59 °C, 60 °C, 61 °C, 62 °C, 63 °C, 64 °C, 65 °C, 66 °C, 67 °C, 68 °C, 69 °C, 70 °C, 71 °C, 72 °C, 73 °C, 74 °C, 75 °C, 76 °C, 77 °C, 78 °C, 79 °C, 80 °C, 81 °C, 82 °C, 83 °C, 84 °C, 85 °C, 86 °C, 87 °C, 88 °C, 89 °C, 90 °C, 91 °C, 92 °C, 93 °C, 94 °C, 95 °C, 96 °C, 97 °C, 98 °C, 99 °C, 100 °C, 101 °C, 102 °C, 103 °C, 104 °C, 105 °C, 106 °C, 107 °C, 108 °C, 109 °C oder 110 °C, ohne die Notwendigkeit einer externen Zugabe eines Reduktionsmittels, einer anschließenden Sinterung oder dergleichen. Reaktionstemperaturen zwischen etwa 100 °C und 110 °C können dabei die Verwendung eines Druckbehälters bzw. Autoklaven erforderlich machen. Vorteilhafterweise kann das Verfahren aber auch bei Reaktionstemperaturen von bis zu 100 °C oder weniger unter Normaldruck (STP: 1,0 bar) durchgeführt werden, wobei grundsätzlich auch geringere oder höhere Reaktionsdrücke vorgesehen bzw. eingestellt sein können, wobei dies nicht zwingend erforderlich ist. Die genannten Reaktionstemperaturen während des Verfahrens und die rasche Alkalisierung bis zum Erreichen des End-pH-Werts sind für das erfindungsgemäße Verfahren ausschlaggebend, da ansonsten anstelle von Zinkit zumindest überwiegend andere Zink-Verbindungen gebildet werden können. Ohne an die Richtigkeit dieser Annahme gebunden werden zu wollen, gehen die Erfinder davon aus, dass die Reaktion kinetisch kontrolliert ist und bei zu geringen oder zu hohen Reaktionstemperaturen und/oder bei zu geringer Alkalisierungsrate andere, gegebenenfalls thermodynamisch stabilere Zink-Verbindungen als Zinkit gebildet werden. Generell kann die Alkalisierungsrate in Abhängigkeit der Reaktionstemperatur eingestellt werden. Je höher die Reaktionstemperatur, umso geringere Alkalisierungsraten können dabei gewählt werden, um eine möglichst hohe Ausbeute zu erzielen. Umgekehrt können entsprechend höhere Alkalisierungsraten bei niedrigeren Reaktionstemperaturen gewählt werden, um eine möglichst hohe Ausbeute zu erzielen. In einfachster Ausgestaltung besteht das Verfahren ausschließlich aus den genannten Schritten. Alternativ oder zusätzlich kann vorgesehen sein, dass das Verfahren ausschließlich unter Zugabe eines Mittels zum Einstellen des pH-Werts und ohne die Zugabe sonstiger Verbindungen, das heißt insbesondere ohne die Zugabe eines externen Reduktionsmittels, ohne die Zugabe von Nukleationskeimen und/oder ohne Zugabe von CO₂ bzw. Carbonaten und/oder Sulfaten und/oder Ammoniak und/oder Oxalaten durchgeführt wird, da hierdurch in der Regel anstelle von Zinkit thermodynamisch stabilere Zwischenprodukte gebildet werden, die - wenn überhaupt - nur durch eine anschließende, extrem zeit- und energieaufwändige Calcinierung in das metastabile Zinkit umgewandelt werden können. Das Verfahren kann sowohl unter Sauerstoffab- oder -ausschluss bzw. unter Schutzgasatmosphäre als auch unter Sauerstoffzugabe durchgeführt werden. Weiterhin kann das Verfahren grundsätzlich ohne sonochemische Methoden, Mikrowellentechnik und dergleichen durchgeführt werden. Rühren oder anderweitige Bewegungen der Reaktionslösung, beispielsweise Schütteln, Schwenken oder Oszillationsbewegungen, sind nicht zwingend erforderlich, begünstigen und beschleunigen aber grundsätzlich die Umwandlung. Unter dem Begriff "Anionenart" sind im Rahmen der vorliegenden Offenbarung ein-, zwei- oder mehrfach negativ geladene Ionen und anorganische oder organische Moleküle zu verstehen, beispielsweise Chlorid, Bromid, Sulfat, Nitrat, Oxid, Phosphat, Hydroxid, Acetat und dergleichen sowie beliebige Mischungen hieraus, die als Gegenionen zu den positiv geladenen Zinkionen und gegebenenfalls weiteren in der Lösung vorhandenen Kationen fungieren. Die wässrige Lösung kann nach dem Ausfällen auch als Suspension bezeichnet werden. Generell sind "ein/eine" im Rahmen dieser Offenbarung als unbestimmte Artikel zu lesen, also ohne ausdrücklich gegenteilige Angabe immer auch als "mindestens ein/mindestens eine". Umgekehrt können "ein/eine" auch als "nur ein/nur eine" verstanden werden.

In einer vorteilhaften Ausgestaltung der Erfindung ist vorgesehen, dass die wässrige Lösung 0,1-60 g/l, also beispielsweise 0,1 g/l, 0,2 g/l, 0,3 g/l, 0,4 g/l, 0,5 g/l, 0,6 g/l, 0,7 g/l, 0,8 g/l, 0,9 g/l, 1,0 g/l, 1 g/l, 2 g/l, 3 g/l, 4 g/l, 5 g/l, 6 g/l, 7 g/l, 8 g/l, 9 g/l, 10 g/l, 11 g/l, 12 g/l, 13 g/l, 14 g/l, 15 g/l, 16 g/l, 17 g/l, 18 g/l, 19 g/l, 20 g/l, 21 g/l, 22 g/l, 23 g/l, 24 g/l, 25 g/l, 30 g/l, 35 g/l, 40 g/l, 45 g/l, 50 g/l, 55 g/l, 60 g/l oder entsprechende Zwischenwerte, insbesondere zwischen 2,0 g/l und 6,0 g/l Zink-Ionen enthält. Alternativ oder zusätzlich kann es vorgesehen sein, dass die wässrige Lösung zusätzliche Metallionen, insbesondere Na-, K-, Ca-, Pb-, Cr-, Cd-, Cu- und/oder Fe-Ionen, enthält. Mit anderen Worten können neben Zn-Ionen zusätzlich weitere Metallionen, beispielsweise Na, K, Ca, Pb, Cd, Cu, Cr, Fe etc. einzeln oder in beliebiger Kombination und Oxidationsstufe bzw. Oxidationsstufenkombination in der wässrigen Lösung vorliegen oder können vor dem Alkalisierungsschritt der wässrigen Lösung zugesetzt bzw. in Lösung gebracht werden. Die Konzentrationen der Kationen und Anionen in der wässrigen Lösung können hierbei im mg/l Bereich liegen oder bis zu 60 g/l oder mehr betragen, abhängig vom Element. Vorzugsweise ist die Konzentration an Zink-Ionen im Bereich von 2,0 bis 6,0 g/l.

Alternativ oder zusätzlich kann es vorgesehen sein, dass der wässrigen Lösung wenigstens ein Dotierungsmittel zugesetzt wird, welches in die Kristallstruktur des Zinkits eingelagert wird. Die Anwesenheit von weiteren Kationen oder Anionen in der Lösung hemmt die Bildung von Zinkit in der Regel nicht, solange ionenabhängige Maximalkonzentrationen nicht überschritten werden. In die Struktur von Zinkit können damit gezielt weitere Ionenarten, beispielsweise Metallionen eingebaut werden, um die physikalischen Eigenschaften von Zinkit an einen gewünschten Anwendungszweck anzupassen, beispielsweise wenn das synthetisierte Zinkit als Photokatalysator verwendet werden soll. Beispielsweise kann mit Nickel (Ni) gedopt werden. Der Einbau von Nickel in die ZnO-Struktur kann über magnetische Messungen verifiziert bzw. überwacht werden.

Vorzugsweise enthält die wässrige Lösung als Anionen Sulfat-Ionen oder Chlorid-Ionen oder eine Kombination aus Sulfat- und Chlorid-Ionen. Wenn die wässrige Lösung Sulfationen enthält, ist es besonders bevorzugt, dass die wässrige Lösung mehr als 8 g/L Sulfationen enthält.

In einer weiteren vorteilhaften Ausgestaltung enthält die wässrige Lösung 20-120 g/l Sulfat- und/oder 20-120 g/l Chlorid-Ionen, also beispielsweise 20 g/l, 21 g/l, 22 g/l, 23 g/l, 24 g/l, 25 g/l, 26 g/l, 27 g/l, 28 g/l, 29 g/l, 30 g/l, 31 g/l, 32 g/l, 33 g/l, 34 g/l, 35 g/l, 36 g/l, 37 g/l, 38 g/l, 39 g/l, 40 g/l, 41 g/l, 42 g/l, 43 g/l, 44 g/l, 45 g/l, 46 g/l, 47 g/l, 48 g/l, 49 g/l, 50 g/l, 51 g/l, 52 g/l, 53 g/l, 54 g/l, 55 g/l, 56 g/l, 57 g/l, 58 g/l, 59 g/l, 60 g/l, 61 g/l, 62 g/l, 63 g/l, 64 g/l, 65 g/l, 66 g/l, 67 g/l, 68 g/l, 69 g/l, 70 g/l, 71 g/l, 72 g/l, 73 g/l, 74 g/l, 75 g/l, 76 g/l, 77 g/l, 78 g/l, 79 g/l, 80 g/l, 81 g/l, 82 g/l, 83 g/l, 84 g/l, 85 g/l, 86 g/l, 87 g/l, 88 g/l, 89 g/l, 90 g/l, 91 g/l, 92 g/l, 93 g/l, 94 g/l, 95 g/l, 96 g/l, 97 g/l, 98 g/l, 99 g/l, 100 g/l, 101 g/l, 102 g/l, 103 g/l, 104 g/l, 105 g/l, 106 g/l, 107 g/l, 108 g/l, 109 g/l, 110 g/l, 111 g/l, 112 g/l, 113 g/l, 114 g/l, 115 g/l, 116 g/l, 117 g/l, 118 g/l, 119 g/l oder 120 g/l, insbesondere 50-80 g/l Sulfat- und/oder Chlorid-Ionen, wobei entsprechende Zwischenwerte als mitoffenbart anzusehen sind. Die Konzentration an Sulfat- und/oder Chlorid-Ionen kann bevorzugt einzeln oder kombiniert bis zu 65,0 bis 80,0 g/l, insbesondere 70,5 bis 75,0 g/l, betragen.

Weitere Vorteile ergeben sich dadurch, dass das Alkalisieren der wässrigen Lösung durch Zugabe einer weiteren Lösung, welche Hydroxid-Ionen enthält, erfolgt, insbesondere durch Zugabe von Natron- und/oder Kalilauge, und/oder bei welchem die wässrige Lösung in eine Hydroxid-Ionen-haltige weitere Lösung, insbesondere in Natron- und/oder Kalilauge, eingebracht wird. Mit anderen Worten ist es vorgesehen, dass die wässrige Lösung zur Alkalisierung bzw. pH-Einstellung zu einem Alkalisierungsmittel (zum Beispiel Natron- und/oder Kalilauge) zugegeben wird. Umgekehrt kann aber auch die wässrige Lösung vorgelegt und das Alkalisierungsmittel mit der erforderlichen Geschwindigkeit und Konzentration zugegeben werden, um die gewünschte Alkalisierungsrate zu erreichen. Generell sollte eine möglichst hochkonzentrierte Lauge, beispielsweise 5 M bis 10 M, insbesondere etwa 8 M, verwendet werden, um eine unnötige Verdünnung und damit eine unerwünschte Senkung der Alkalisierungsrate sowie einen unnötigen Wasserverbrauch zu vermeiden.

Eine besonders hohe Ausbeute ergibt sich dadurch, dass die vorbestimmte Temperatur auf einen Temperaturwert T1 zwischen 10 °C und 90 °C eingestellt wird. Durch diesen Temperaturbereich kann zudem vorteilhaft auf die Verwendung von Druckbehältern bzw. Autoklaven und dergleichen verzichtet werden. In einer vorteilhaften Ausgestaltung wird eine möglichst niedrige Temperatur im Bereich zwischen 10 C und 60 °C, insbesondere zwischen 20 °C und 55 °C, besonders bevorzugt zwischen 20 °C und 45 °C, beispielsweise etwa 35 °C bis 42 °C, eingestellt bzw. für die weitere Verfahrensdurchführung verwendet. Die Temperatur bezeichnet dabei die Anfangstemperatur der Lösung bzw. Suspension vor der Alkalisierung bzw. vor einer etwaigen pH-Einstellung. Durch eine optionale pH-Einstellung und/oder durch die Alkalisierung mit hoher Alkalisierungsrate kann die Temperatur der Lösung aufgrund exothermer Reaktionswärme im weiteren Verlauf entsprechend steigen. Durch die Einstellung einer niedrigen Temperatur kann Zinkit mit besonders geringem Energieaufwand hergestellt werden, wobei gegebenenfalls als Zwischenprodukt Gordait oder andere Zn-Salze, wie beispielsweise Zn-Sulfat-Hydroxy-Chloride entstehen können, die durch anschließende Alterung in Zinkit umgewandelt werden können.

In einer weiteren vorteilhaften Ausgestaltung ist vorgesehen, dass eine Alkalisierungsrate A eingestellt wird, welche der Formel A > -0,0004 ΔpH/s °C * T1 + 0,052 ΔpH/s entspricht, wobei T1 den Temperaturwert der wässrigen Lösung in °C angibt. Indem die Alkalisierungsrate A gemäß dieser Formel eingestellt wird, kann die Alkalisierungsrate optimal in Abhängigkeit der gewählten Reaktionstemperatur so gewählt werden, dass stets eine hohe Ausbeute an direkt gefälltem Zinkit erhalten wird und Nebenreaktionen zurückgedrängt werden. Für exemplarische Temperaturen T1 zwischen 10 °C und 90 °C ergeben sich dadurch folgende Mindestalkalisierungsraten A:
T1=10 °C: A > 0,0480 ΔpH/s, T1=11 °C: A > 0,0476 ΔpH/s, T1=12 °C: A > 0,0472 ΔpH/s,
T1=13 °C: A > 0,0468 ΔpH/s, T1=14 °C: A > 0,0464 ΔpH/s, T1=15 °C: A > 0,0460 ΔpH/s,
T1=16 °C: A > 0,0456 ΔpH/s, T1=17 °C: A > 0,0452 ΔpH/s, T1=18 °C: A > 0,0448 ΔpH/s,
T1=19 °C: A > 0,0444 ΔpH/s, T1=20 °C: A > 0,0440 ΔpH/s, T1=21 °C: A > 0,0436 ΔpH/s,
T1=22 °C: A > 0,0432 ΔpH/s, T1=23 °C: A > 0,0428 ΔpH/s, T1=24 °C: A > 0,0424 ΔpH/s,
T1=25 °C: A > 0,0420 ΔpH/s, T1=26 °C: A > 0,0416 ΔpH/s, T1=27 °C: A > 0,0412 ΔpH/s,
T1=28 °C: A > 0,0408 ΔpH/s, T1=29 °C: A > 0,0404 ΔpH/s, T1=30 °C: A > 0,0400 ΔpH/s,
T1=31 °C: A > 0,0396 ΔpH/s, T1=32 °C: A > 0,0392 ΔpH/s, T1=33 °C: A > 0,0388 ΔpH/s,
T1=34 °C: A > 0,0384 ΔpH/s, T1=35 °C: A > 0,0380 ΔpH/s, T1=36 °C: A > 0,0376 ΔpH/s,
T1=37 °C: A > 0,0372 ΔpH/s, T1=38 °C: A > 0,0368 ΔpH/s, T1=39 °C: A > 0,0364 ΔpH/s,
T1=40 °C: A > 0,0360 ΔpH/s, T1=41 °C: A > 0,0356 ΔpH/s, T1=42 °C: A > 0,0352 ΔpH/s,
T1=43 °C: A > 0,0348 ΔpH/s, T1=44 °C: A > 0,0344 ΔpH/s, T1=45 °C: A > 0,0340 ΔpH/s,
T1=46 °C: A > 0,0336 ΔpH/s, T1=47 °C: A > 0,0332 ΔpH/s, T1=48 °C: A > 0,0328 ΔpH/s,
T1=49 °C: A > 0,0324 ΔpH/s, T1=50 °C: A > 0,0320 ΔpH/s, T1=51 °C: A > 0,0316 ΔpH/s,
T1=52 °C: A > 0,0312 ΔpH/s, T1=53 °C: A > 0,0308 ΔpH/s, T1=54 °C: A > 0,0304 ΔpH/s,
T1=55 °C: A > 0,0300 ΔpH/s, T1=56 °C: A > 0,0296 ΔpH/s, T1=57 °C: A > 0,0292 ΔpH/s,
T1=58 °C: A > 0,0288 ΔpH/s, T1=59 °C: A > 0,0284 ΔpH/s, T1=60 °C: A > 0,0280 ΔpH/s,
T1=61 °C: A > 0,0276 ΔpH/s, T1=62 °C: A > 0,0272 ΔpH/s, T1=63 °C: A > 0,0268 ΔpH/s,
T1=64 °C: A > 0,0264 ΔpH/s, T1=65 °C: A > 0,0260 ΔpH/s, T1=66 °C: A > 0,0256 ΔpH/s,
T1=67 °C: A > 0,0252 ΔpH/s, T1=68 °C: A > 0,0248 ΔpH/s, T1=69 °C: A > 0,0244 ΔpH/s,
T1=70 °C: A > 0,0240 ΔpH/s, T1=71 °C: A > 0,0236 ΔpH/s, T1=72 °C: A > 0,0232 ΔpH/s,
T1=73 °C: A > 0,0228 ΔpH/s, T1=74 °C: A > 0,0224 ΔpH/s, T1=75 °C: A > 0,0220 ΔpH/s,
T1=76 °C: A > 0,0216 ΔpH/s, T1=77 °C: A > 0,0212 ΔpH/s, T1=78 °C: A > 0,0208 ΔpH/s,
T1=79 °C: A > 0,0204 ΔpH/s, T1=80 °C: A > 0,0200 ΔpH/s, T1=81 °C: A > 0,0196 ΔpH/s,
T1=82 °C: A > 0,0192 ΔpH/s, T1=83 °C: A > 0,0188 ΔpH/s, T1=84 °C: A > 0,0184 ΔpH/s,
T1=85 °C: A > 0,0180 ΔpH/s, T1=86 °C: A > 0,0176 ΔpH/s, T1=87 °C: A > 0,0172 ΔpH/s,
T1=88 °C: A > 0,0168 ΔpH/s, T1=89 °C: A > 0,0164 ΔpH/s, T1=90 °C: A > 0,0160 ApH/s.
Man erkennt, dass höhere Temperaturen T1 generell geringere Alkalisierungsraten A erforderlich machen und umgekehrt.

Alternativ ist es vorgesehen, dass eine Alkalisierungsrate A eingestellt wird, welche der Formel A ≤ -0,0004 ΔpH/s °C * T1 + 0,052 ΔpH/s entspricht, wobei T1 den Temperaturwert der wässrigen Lösung in °C angibt, wobei T1 ≤ 65 °C, insbesondere ≤ 60 °C, ist und wobei die wässrige Lösung vorzugsweise Na⁺-, Cl⁻- und SO₄²⁻-Ionen enthält. Hierdurch kann anstelle einer direkten Ausfällung von Zinkit zunächst zumindest anteilig eine abweichende Zinkverbindung, beispielsweise Gordait (NaZn₄(SO₄)(OH)₆Cl · 6 H₂O), als Zwischenprodukt erzeugt bzw. ausgefällt werden. Durch eine anschließende, grundsätzlich optionale Alterung kann dann eine Umwandlung in Zinkit zur Ausbeutesteigerung vorgenommen werden. Der Syntheseweg über Gordait als thermodynamisch stabilere Zwischenphase mit anschließender Alterung kann besonders bei der Behandlung von wässrigen Lösungen mit unbekannter, komplexer oder stark schwankender Zusammensetzung, beispielsweise bei Abwässern, sinnvoll sein und auch unter chemisch schwierigen Bedingungen höhere Ausbeuten an Zinkit sicherstellen.

Vorzugsweise ist es vorgesehen, dass die wässrige Lösung nach dem Alkalisieren für eine vorbestimmte Zeitdauer bei einer vorbestimmten Temperatur einer Alterung unterzogen wird. Hierdurch sind Ausbeutesteigerungen an Zinkit möglich, da etwaige Zink-haltigen Nebenphasen und Zwischenprodukte durch die Alterung zumindest überwiegend oder weitgehend in Zinkit umgewandelt werden. Während der Alterung kann die Reaktionslösung bzw. Suspension ein- oder mehrmals umgerührt oder anderweitig bewegt bzw. durchmischt werden. Ebenso kann die Temperatur der Alterung konstant gehalten oder ein- oder mehrmals variiert werden. Weiterhin kann es vorgesehen sein, dass der Reaktionslösung bzw. Suspension Wasser, insbesondere destilliertes bzw. vollentsalztes Wasser zugesetzt wird, da hierdurch in vielen Fällen die Phasenumwandlung zu Zinkit beschleunigt wird. Eine Alterung kann insbesondere dann vorteilhaft sein, wenn die vorherige Alkalisierungsreaktion mit vergleichsweise kleinen Alkalisierungsraten und/oder bei geringeren Temperaturen T1 durchgeführt wurde, da unter solchen Bedingungen die Fällung von anderen Zink-haltigen Verbindungen, beispielsweise von Gordait bei ausreichend verfügbaren Na⁺-, Cl⁻- und SO₄²⁻-Konzentrationen, in der Regel begünstigt wird. In diesem Fall kann durch Alterung eine Umwandlung von Gordait oder anderen Zink-haltigen Nebenphasen und Zwischenprodukten in Zinkit erreicht werden.

In einer vorteilhaften Ausgestaltung der Erfindung ist vorgesehen, dass die Zeitdauer der Alterung mindestens 1 Minute, insbesondere mindestens 60 Minuten, und/oder höchstens 48 Stunden, insbesondere höchstens 24 Stunden, beträgt. Insbesondere kann es vorgesehen sein, dass die Alterungsreaktion für 1 min, 2 min, 3 min, 4 min, 5 min, 10 min, 20 min, 30 min, 1 h, 2 h, 3 h, 4 h, 5 h, 6 h, 7 h, 8 h, 9 h, 10 h, 11 h, 12 h, 13 h, 14 h, 15 h, 16 h, 17 h, 18 h, 19 h, 20 h, 21 h, 22 h, 23 h oder 24 h durchgeführt wird, wobei entsprechende Zwischenwerte generell als mitoffenbart anzusehen sind. Hierdurch kann einerseits eine überwiegende oder zumindest im Wesentlichen vollständige Umwandlung verschiedener Zink-haltiger Zwischenprodukte in Zinkit erreicht werden, während andererseits eine wirtschaftliche Verfahrensführung mit Verzicht auf hohe Energieeinträge und lange Verfahrensdauern sichergestellt wird. Alternativ oder zusätzlich wird eine hohe Ausbeute dadurch ermöglicht, dass die Temperatur bei der Alterung auf einen Temperaturwert T2 zwischen 30 °C und 110 °C eingestellt wird.

In einer vorteilhaften Ausgestaltung der Erfindung ist vorgesehen, dass die Alterung in einem abgeschlossenen Behälter und/oder unter einem Sättigungsdampfdruck der wässrigen Lösung und/oder in einer Atmosphäre mit kontrolliertem Sauerstoffgehalt durchgeführt wird. Hierdurch können die Alterungsbedingungen optimal auf die Zusammensetzung der wässrigen Lösung abgestimmt werden.

Eine zusätzlich verbesserte Ausbeute wird dadurch erreicht, dass die wässrige Lösung wenigstens zeitweise bewegt, insbesondere gerührt, geschüttelt, umgewälzt und/oder geschwenkt, wird. Dies kann grundsätzlich vor, während und/oder nach dem Alkalisieren erfolgen. Ebenso kann ein Rühren etc. der Lösung während der grundsätzlich optionalen Alterung erfolgen.

In einer vorteilhaften Ausgestaltung der Erfindung ist vorgesehen, dass ausgefällter Zinkit von der restlichen wässrigen Lösung abgetrennt, insbesondere abfiltriert, und vorzugsweise ein- oder mehrmals gewaschen wird. Dies erlaubt eine einfache und kostengünstige Gewinnung von Zinkit mit einem hohen Reinheitsgrad.

Eine besonders einfache, prozesssichere und ressourcenschonende Verfahrensführung wird erreicht, wenn das Verfahren ohne Zusatz eines Reduktionsmittels durchgeführt wird.

In einer vorteilhaften Ausgestaltung der Erfindung ist vorgesehen, dass als wässrige Lösung ein Eluat eines Abfallprodukts, insbesondere von Flugaschen aus der Müllverbrennung, und/oder ein Industrieabwasser und/oder eine Galvaniklösung verwendet wird. Mit Hilfe des erfindungsgemäßen Verfahrens kann somit der Wertstoff Zinkit vorteilhaft aus verschiedenen Zink-haltigen Industrie-Abwässern gewonnen werden. Insbesondere Zinkbäder aus der Galvanik enthalten häufig hohe Konzentrationen an Zink-Ionen und können daher vorteilhaft zur Gewinnung von Zinkit verwendet werden.

Ein zweiter Aspekt der Erfindung betrifft eine Vorrichtung zum Herstellen von Zinkit. Erfindungsgemäß umfasst diese wenigstens einen Behälter zum Aufnehmen einer wässrigen Lösung, welche zumindest Zink-Ionen und wenigstens eine Anionenart enthält und einen Start-pH-Wert ≤7 besitzt, wenigstens eine pH-Steuer- und/oder Regeleinrichtung zum Ermitteln und Einstellen eines pH-Werts der wässrigen Lösung und eine Recheneinrichtung, welche zum Datenaustausch mit der pH-Steuer- und/oder Regeleinrichtung gekoppelt ist und dazu ausgebildet ist, die pH-Steuer- und/oder Regeleinrichtung so zu steuern und/oder zu regeln, dass die wässrige Lösung bei einer vorbestimmten Temperatur mit einer vorbestimmten Alkalisierungsrate A, welche mindestens 0,010 ΔpH/s beträgt, bis zum Erreichen eines End-pH-Werts, welcher mindestens 7,5 beträgt, zum Bilden des Zinkits alkalisierbar ist. Die erfindungsgemäße Vorrichtung erlaubt damit vorteilhaft die Herstellung von Zinkit mit geringem Energieeinsatz und ohne die Notwendigkeit von zusätzlichen Reduktionsmitteln und dergleichen in möglichst wenig Stufen. Insbesondere eignet sich die erfindungsgemäße Vorrichtung zur teil- oder vollautomatisierten sowie zur batchweisen oder kontinuierlichen Durchführung des Verfahrens gemäß dem ersten Erfindungsaspekt. Weitere Merkmale und deren Vorteile sind den Beschreibungen des ersten Erfindungsaspekts zu entnehmen.

In einer vorteilhaften Ausgestaltung der Erfindung umfasst die Vorrichtung wenigstens eine Temperiereinrichtung zum Steuern und/oder Regeln einer Temperatur der wässrigen Lösung. Hierdurch kann die Temperatur in Abhängigkeit des pH-Werts so eingestellt werden, dass die herrschenden Prozessparameter die Bildung von Zinkit fördern.

Weitere Vorteile ergeben sich dadurch, dass die Recheneinrichtung dazu ausgebildet ist, die pH-Steuer- und/oder Regeleinrichtung anhand eines vorbestimmten Kennfelds, in welchem ein Zusammenhang zwischen der Temperatur der wässrigen Lösung, dem pH-Wert der wässrigen Lösung und der Alkalisierungsrate gespeichert ist, zu steuern und/oder zu regeln. Hierdurch kann besonders zuverlässig sichergestellt werden, dass alle relevanten Prozessparameter stets im für die Bildung von Zinkit benötigten Stabilitätsfeld liegen.

Weitere Merkmale der Erfindung ergeben sich aus den Ansprüchen und den Ausführungsbeispielen. Die vorstehend in der Beschreibung genannten Merkmale und Merkmalskombinationen, sowie die nachfolgend in den Ausführungsbeispielen genannten und/oder in den Ausführungsbeispielen allein gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Ausführungsbeispielen nicht explizit genannt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Ausführungsbeispiel 1: Synthese von Zinkit (ZnO) durch alkalische Fällung aus Sulfat- und Chlorid-reichen Lösungen.

Im ersten Ausführungsbeispiel des erfindungsgemäßen Verfahrens wurde Zinkit (ZnO) folgendermaßen hergestellt:
Zunächst wurde eine exemplarische wässrige Lösung hergestellt, indem die Edukte ZnCl₂, NaCl, KCl, CaCl₂ und CaSO₄ in Wasser gelöst und HCl (32%) zugegeben wurde. Die Endkonzentration in der wässrigen Lösung betrugen Na⁺ 30 g/l, K⁺ 7 g/l, Ca²⁺ 4 g/l, Zn²⁺ 3 g/l, SO₄²⁻ 2,5 g/l, Cl⁻ 70 g/l. Anschließend wurde eine Temperatur T1 der wässrigen Lösungen von 60 °C eingestellt. Die Alkalisierung der wässrigen Lösung wurde mit 8 M NaOH-Lösung innerhalb kurzer Zeit, beispielsweise innerhalb von 240 Sekunden oder weniger, durchgeführt. Der pH-Wert der wässrigen Lösung wurde durch bedarfsweise Zugabe von 8 M NaOH-Lösung für 5-10 Min. über einem pH-Wert von 8,5 gehalten.

Spuren von Gordait, einem Natriumzinkhydroxysulfat, wurden mittels Infrarot-Spektroskopie nachgewiesen. Andere potentielle Nebenphasen und Zwischenprodukte wie Zinkhydroxide oder Zinkhydroxychloride konnten analytisch ausgeschlossen werden. Die Ausbeute an Zinkit betrug 99.9%.

Zinkit kann aus der entstandenen Suspension durch Filtration abgetrennt und gegebenenfalls ein- oder mehrmals mit destilliertem bzw. vollentsalztem Wasser gewaschen werden.

Ausführungsbeispiel 2: Synthese von ZnO durch Fällung und Alterung aus einer Na-, K-, Ca- und Sulfat- und Chlorid-reichen wässrigen Lösung.

In einem zweiten Ausführungsbeispiel des erfindungsgemäßen Verfahrens wurde Zinkit (ZnO) folgendermaßen hergestellt. Zunächst wurde erneut eine wässrige Lösung hergestellt, indem die Edukte ZnCl₂, NaCl, KCl, CaCl₂ und CaSO₄ in Wasser gelöst und HCl (32%) zugegeben wurde. Die Endkonzentration in der wässrigen Lösung betrugen Na⁺ 30 g/l, K⁺ 7 g/l, Ca²⁺ 4 g/l, Zn²⁺ 3 g/l, SO₄²⁻ 2,5 g/l, Cl⁻ 70 g/l. Anschließend wurde die wässrige Lösung auf eine Reaktionstemperatur T1 von 30 °C temperiert. Die Alkalisierung wurde mit 8 M NaOH binnen von kurzer Zeit, beispielsweise innerhalb von etwa 8 Minuten oder weniger durchgeführt. Die genaue Zeit hängt unter anderem vom zuzugebenden Volumen und der OH⁻-Konzentration der zugegebenen Lösung ab und kann für eine gegebene Synthese durch einfache Versuche optimiert werden. Der pH-Wert der Lösung wurde durch Zugabe von 8 M NaOH für 5 - 10 min über einem pH-Wert von 7,5 gehalten. Die entstandene Suspension wurde für 3 h bei etwa 110 °C unter Sättigungsdampfdruck und ohne Sauerstoffzufuhr gealtert, um eine hohe Ausbeute an Zinkit sicherzustellen.

Spuren von Gordait, einem Natriumzinkhydroxysulfat, wurden mittels Infrarot-Spektroskopie nachgewiesen. Andere potentielle Nebenphasen und Zwischenprodukte wie Zinkhydroxide oder Zinkhydroxychloride konnten analytisch ausgeschlossen werden. Die Ausbeute an Zinkit betrug etwa 93,6 %.

Die Erfindung ermöglicht erstmals eine Synthese von Zinkit aus Chlorid-reichen Lösungen bei Temperaturen von höchstens 110°C. Aufwendige Verfahren, wie etwa Kalzinieren des Zwischenprodukts bei Temperaturen > 300°C oder Spraytrocknung, Hoch-Energie-Trockenmahlung, Sol-Gel Synthesen und dergleichen können vermieden werden.

Die Reaktions- und Alterungstemperaturen des erfindungsgemäßen Verfahrens sowie die Alkalisierung (Zugabegeschwindigkeit und der End-pH-Wert) sind für den Prozess wichtig. Die Anwesenheit von weiteren Kationen oder Anionen in der Lösung hemmt die Bildung von Zinkit nicht. In die Struktur von Zinkit können optional gezielt weitere Metall-Ionen eingebaut werden, um die physikalischen Eigenschaften von Zinkit zu ändern, beispielsweise wenn das Produkt als Photokatalysator verwendet werden soll.

Damit ist eine Synthese von Zinkit bei niedrigeren Temperaturen und Drücken und dementsprechend geringem Energieverbrauch möglich. Trotz einer komplexen Zusammensetzung der wässrigen Ausgangslösung (wie z.B. SO₄²⁻, Cl⁻ oder weiterer Anionen und Kationen) kann ZnO auch aus salinen bzw. Sulfat- und/oder Chlorid-reichen Lösungen synthetisiert und gefällt werden. Eine industrielle Umsetzung wird durch die niedrigeren Temperaturen und Drücke im Hydrothermalverfahren sowie dem geringen technischen Aufwand im Vergleich zu herkömmlichen Verfahren erstmals möglich. Das erfindungsgemäße Verfahren kann zudem leicht automatisiert durchgeführt werden. Zudem können durch das erfindungsgemäße Verfahren Abfallströme zur Wertstoffgewinnung verwendet werden, beispielsweise Eluate von Flugaschen aus der Müllverbrennung, welche stark Zink-, Blei-, Natrium-, Kalium-, Calcium-, Chlorid- und Sulfat-haltig sind. Somit kann insbesondere das Zink aus den Flugaschen durch den Prozess zurückgewonnen und angereichert werden, was es attraktiv für ein Recycling macht.

Ausführungsbeispiel 3: ZnO Gewinnung bei einer Temperatur von 35 °C ohne Zugabe von CO₂-haltigen Reagenzien

In diesem Beispiel erfolgt die Bildung von Zinkit (ZnO) bei niedrigen Temperaturen mit Hilfe einer hohen Alkalisierungsrate von etwa 0,3 ApH/s.

Eine wässrige Lösung wurde mit den Edukten ZnCl₂, NaCl, KCl, CaCl₂ und CaSO₄ hergestellt. Der pH-Wert der wässrigen Lösung wurde durch Zugabe von HCl (32%) auf einen Wert von 0,2 eingestellt. Die Anfangstemperatur der Lösung von etwa 35-37 °C stieg dabei aufgrund der exothermen Dissoziation der Salzsäure auf etwa 41 °C. Die wässrige Lösung enthielt damit die folgende Zusammensetzung: Na⁺ 30 g/l, K⁺ 7 g/l, Ca²⁺ 4 g/l, Zn²⁺ 3 g/l, SO₄²⁻ 2,5 g/l, Cl⁻ 70 g/l. Die Alkalisierung der wässrigen Lösung wurde mit 8 M NaOH-Lösung innerhalb von 35 Sekunden durchgeführt, um den End-pH-Wert 10,7 zu erreichen. Dies entspricht unter Annahme einer linearen pH-Änderung einer Alkalisierungsrate von etwa 0,3 ΔpH/s. Der pH-Wert der wässrigen Lösung wurde für 10 Minuten bei einem pH-Wert von mindestens 9 gehalten, wodurch ZnO als Produkt ausgefällt wurde.

Der Niederschlag wurde durch Filtration von der verbleibenden Lösung getrennt und in einem grundsätzlich optionalen Schritt mehrmals mit destilliertem Wasser gewaschen. Die Ausbeute betrug 99,7 % Zn (Konzentration Zn initial: 1964,7 mg/l; Konzentration Zn in der verbleibenden Lösung nach Fällung: 5,6 mg/l). Spuren von Gordait, einem Zinkhydroxysulfat, wurden durch Infrarotspektroskopie nachgewiesen. Andere potenzielle Nebenphasen und Zwischenprodukte wie Zinkhydroxide oder Zinkhydroxychloride konnten im Produkt analytisch ausgeschlossen werden.

### Anwendungsbeispiel 4): ZnO-Gewinnung durch Alterung

Die Durchführung der Reaktion erfolgte analog zum Ausführungsbeispiel 2. In einer anschließenden Versuchsreihe wurde der Einfluss der Alterungszeit auf die Umwandlung von als Zwischenprodukt entstandenem Gordait (NaZn₄(SO₄)(OH)₆Cl · 6 H₂O) in Zinkit (ZnO) bei einer Alterungstemperatur von 110 °C untersucht. Es hat sich gezeigt, dass Gordait durch eine Alterung bei 110 °C in Suspension bereits nach einer Stunde weitgehend und nach zwei bis vier Stunden vollständig oder zumindest im Wesentlichen vollständig in Zinkit umgewandelt wird. Indem die thermodynamisch stabilere Phase Gordait vor der Alterung zunächst von der restlichen salzreichen wässrigen Lösung bzw. Suspension abgetrennt wird, kann die Umwandlung in das metastabile Zinkit generell zusätzlich begünstigt werden.

### Anwendungsbeispiel 5): ZnO-Gewinnung durch Alterung

Die Durchführung der Reaktion erfolgte analog zum Ausführungsbeispiel 2. In einer anschließenden Versuchsreihe wurde der Einfluss der Alterungstemperatur auf die Umwandlung von Gordait (NaZn₄(SO₄)(OH)₆Cl · 6 H₂O) in Zinkit (ZnO) innerhalb einer Alterungszeit von 24 Stunden untersucht. Es hat sich gezeigt, dass eine Alterungstemperatur von mindestens 70 °C vorteilhaft ist, um Gordait innerhalb der betrachteten 24 Stunden Alterungszeit vollständig oder zumindest im Wesentlichen vollständig in Zinkit umzuwandeln. Optionales Rühren oder anderweitiges Durchmischen der Suspension beschleunigt die Umwandlung zusätzlich und erhöht die Ausbeute. Bei Alterungstemperaturen von 80 °C, 90 °C, 100 °C und 110 °C konnten während der Alterung teilweise Spuren anderer metastabiler Zwischenphasen wie Bechererit (Zn₆Zn₂(OH)₁₃(SO₄)₂) und Namuwit (Zn₄(SO₄)(OH)₆ · 4 H₂O) analytisch nachgewiesen werden.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, Einwaagefehlern, DIN-Toleranzen und dergleichen - als vom Rahmen der Erfindung mitumfasst anzusehen.

## Patentansprüche

1. Verfahren zur Synthese von Zinkit (ZnO), umfassend zumindest die Schritte:
- Bereitstellen einer wässrigen Lösung, welche zumindest Zink-Ionen und wenigstens eine Anionenart enthält und einen Start-pH-Wert ≤7 besitzt; und
- Alkalisieren der wässrigen Lösung bei einer vorbestimmten Temperatur, welche höchstens 110 °C beträgt, mit einer vorbestimmten Alkalisierungsrate A, welche mindestens 0,010 ΔpH/s beträgt, bis zum Erreichen eines End-pH-Werts, welcher mindestens 7,5 beträgt.

2. Verfahren nach Anspruch 1, bei welchem die wässrige Lösung 0,1-60 g/l, insbesondere 2-6 g/l, Zink-Ionen enthält und/oder bei welchem die wässrige Lösung zusätzliche Metallionen, insbesondere Na-, K-, Ca-, Pb-, Cr-, Cd-, Cu- und/oder FeIonen enthält und/oder bei welchem der wässrigen Lösung wenigstens ein Dotierungsmittel zugesetzt wird, welches in die Kristallstruktur des Zinkits eingelagert wird.

3. Verfahren nach Anspruch 1 oder 2, bei welchem die wässrige Lösung als Anionen Sulfat- und/oder Chlorid-Ionen enthält.

4. Verfahren nach Anspruch 3, bei welchem die wässrige Lösung 20-120 g/l, insbesondere 50-80 g/l, Sulfat- und/oder Chlorid-Ionen enthält.

5. Verfahren nach Anspruch 1 oder 4, bei welchem das Alkalisieren der wässrigen Lösung durch Zugabe einer weiteren Lösung, welche Hydroxid-Ionen enthält, erfolgt, insbesondere durch Zugabe von Natron- und/oder Kalilauge, und/oder bei welchem die wässrige Lösung in eine Hydroxid-Ionen-haltige weitere Lösung, insbesondere in Natron- und/oder Kalilauge, eingebracht wird.

6. Verfahren nach einem der Ansprüche 1 bis 5, bei welchem die vorbestimmte Temperatur auf einen Temperaturwert T1 zwischen 10 °C und 90 °C eingestellt wird.

7. Verfahren nach einem der Ansprüche 1 bis 6, bei welchem eine Alkalisierungsrate A eingestellt wird, welche der Formel A > -0,0004 ΔpH/s °C * T1 + 0,052 ΔpH/s entspricht, wobei T1 den Temperaturwert der wässrigen Lösung in °C angibt, oder bei welchem eine Alkalisierungsrate A eingestellt wird, welche der Formel A ≤ -0,0004 ΔpH/s °C * T1 + 0,052 ΔpH/s entspricht, wobei T1 den Temperaturwert der wässrigen Lösung in °C angibt, wobei T1 ≤ 65 °C ist und wobei die wässrige Lösung vorzugsweise Na⁺-, Cl⁻- und SO₄²⁻-Ionen enthält.

8. Verfahren nach einem der Ansprüche 1 bis 7, bei welchem die wässrige Lösung nach dem Alkalisieren für eine vorbestimmte Zeitdauer bei einer vorbestimmten Temperatur einer Alterung unterzogen wird und/oder bei welchem der wässrigen Lösung nach dem Alkalisieren Wasser, insbesondere destilliertes Wasser, zugesetzt wird.

9. Verfahren nach Anspruch 8, bei welchem die Zeitdauer der Alterung mindestens 1 Minute, insbesondere mindestens 60 Minuten, und/oder höchstens 48 Stunden, insbesondere höchstens 24 Stunden, beträgt und/oder bei welchem die Temperatur bei der Alterung auf einen Temperaturwert T2 zwischen 30 °C und 110 °C eingestellt wird.

10. Verfahren nach Anspruch 8 oder 9, bei welchem die Alterung in einem abgeschlossenen Behälter und/oder unter einem Sättigungsdampfdruck der wässrigen Lösung und/oder in einer Atmosphäre mit kontrolliertem Sauerstoffgehalt durchgeführt wird.

11. Verfahren nach einem der Ansprüche 1 bis 10, bei welchem die wässrige Lösung wenigstens zeitweise bewegt, insbesondere gerührt, geschüttelt, umgewälzt und/oder geschwenkt, wird.

12. Verfahren nach einem der Ansprüche 1 bis 11, bei welchem ausgefälltes Zinkit von der restlichen wässrigen Lösung abgetrennt, insbesondere abfiltriert, und vorzugsweise ein- oder mehrmals gewaschen wird.

13. Verfahren nach einem der Ansprüche 1 bis 12, welches ohne Zusatz eines Reduktionsmittels durchgeführt wird.

14. Verfahren nach einem der Ansprüche 1 bis 13, bei welchem als wässrige Lösung ein Eluat eines Abfallprodukts, insbesondere von Flugaschen aus der Müllverbrennung, und/oder ein Industrieabwasser und/oder eine Galvaniklösung verwendet wird.

15. Vorrichtung zum Herstellen von Zinkit, umfassend:
- wenigstens einen Behälter zum Aufnehmen einer wässrigen Lösung, welche zumindest Zink-Ionen und wenigstens eine Anionenart enthält und einen Start-pH-Wert ≤7 besitzt;
- wenigstens eine pH-Steuer- und/oder Regeleinrichtung zum Ermitteln und Einstellen eines pH-Werts der wässrigen Lösung; und
- eine Recheneinrichtung, welche zum Datenaustausch mit der pH-Steuer- und/oder Regeleinrichtung gekoppelt ist und dazu ausgebildet ist, die pH-Steuer- und/oder Regeleinrichtung so zu steuern und/oder zu regeln, dass die wässrige Lösung bei einer vorbestimmten Temperatur mit einer vorbestimmten Alkalisierungsrate A, welche mindestens 0,010 ΔpH/s beträgt, bis zum Erreichen eines End-pH-Werts, welcher mindestens 7,5 beträgt, zum Bilden des Zinkits alkalisierbar ist.

16. Vorrichtung nach Anspruch 15,
**dadurch gekennzeichnet, dass**
diese wenigstens eine Temperiereinrichtung zum Steuern und/oder Regeln einer Temperatur der wässrigen Lösung umfasst.

17. Vorrichtung nach Anspruch 15 oder 16,
**dadurch gekennzeichnet, dass**
die Recheneinrichtung dazu ausgebildet ist, die pH-Steuer- und/oder Regeleinrichtung anhand eines vorbestimmten Kennfelds, in welchem ein Zusammenhang zwischen der Temperatur der wässrigen Lösung, dem pH-Wert der wässrigen Lösung und der Alkalisierungsrate gespeichert ist, zu steuern und/oder zu regeln.
